# EUROPEAN PATENT APPLICATION

(11) **EP 4 693 716 A1**
(43) Date of publication of application: **11.02.2026**
(21) Application number: 24854340.7
(22) Date of filing: 25.07.2024
(51) Int. Cl.: H01M 50/59, H01M 50/574, H01M 50/224, H01M 50/227, H01M 50/502, H01M 50/249

(54) **BATTERY PACK AND DEVICE INCLUDING SAME**

(30) Priority: 14.08.2023 KR 20230106184
(71) Applicant: LG Energy Solution, Ltd., Seoul 07335 (KR)
(72) Inventor: HWANG, Sungtack, Daejeon 34122 (KR); LEE, Wontae, Daejeon 34122 (KR)
(74) Representative: Plasseraud IP
(86) International application number: PCT/KR2024/010820
(87) International publication number: WO 2025/037788

(57) **Abstract**

A battery pack according to one embodiment of the present disclosure comprises: a pack frame on which a plurality of battery modules are mounted; a battery disconnect unit(BDU) located inside the pack frame and electrically connected to the plurality of battery modules; and at least one expanded silicone part located in a case of the battery disconnect unit, wherein an expanded silicone material included in the expanded silicone part exposing to a high temperature environment inside the pack frame expands toward the outside of the case.

## Description

### [TECHNICAL FIELD]

### Cross Citation with Related Application(s)

This application claims the benefit of Korean Patent Application No. 10-2023-0106184 filed on August 14, 2023 in the Korean Intellectual Property Office, the disclosure of which is incorporated herein by reference in its entirety.

The present disclosure relates to a battery pack and a device including the same, and more specifically, to a battery pack that includes at least one expanded silicone part located in a case of a battery disconnect unit, and thus prevents from being directly exposed to or being in contact with a battery disconnect high temperature environment when a thermal runaway phenomenon occurs inside the battery pack, and a device including the same.

### [BACKGROUND]

Secondary batteries, which are highly applicable to various products and exhibit superior electrical properties such as high energy density, etc., are not only commonly applied to portable devices, but also universally applied to an electric vehicle or a hybrid electric vehicle and an energy storage system driven by electrical power sources. The secondary batteries are gaining attention for their primary advantage of remarkably reducing the use of fossil fuels and not generating byproducts from the use of energy, making them a new eco-friendly and energy efficient source of energy.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Generally, the lithium secondary battery may be classified based on the shape of the exterior material into a cylindrical or prismatic secondary battery in which the electrode assembly is embedded in a metal can, and a pouch type secondary battery in which the electrode assembly is embedded in a pouch made of an aluminum laminate sheet.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel. In such a battery module, a large number of battery cells are connected to each other in series or parallel to form a cell assembly, thereby improving capacity and output. Further, a plurality of battery modules can be mounted together with various control and protection systems such as a BMS(battery management system), and a cooling system to form a battery pack.

In particular, the inside of the battery pack includes a battery disconnect unit(BDU) that is installed between a power conversion device of the device in which the battery pack is mounted and the battery module. Here, the battery disconnect unit can disconnect the power of the battery when an abnormal situation such as overcurrent, overheating, or thermal runaway occurs, thereby securing the safety of a battery pack.

However, in the case of abnormal situations such as the above-mentioned overcurrent, overheating, and thermal runaway, a fire may occur inside the battery pack, and the case of the battery disconnect unit may destroys in an ultra-high temperature environment of 1200 degrees Celsius or more, such as a fire. If the case of the battery disconnect unit destroys in this way, the electrical components and busbars inside the battery disconnect unit are likely to cause an electrical short circuit with the surrounding pack structures or other electrical components. In addition, if an electrical short occurs between the electrical components and busbars inside the battery disconnect unit and the surrounding pack structures or other electrical components, there is a problem that an electrical closed circuit is formed inside the battery pack, thereby accelerating thermal propagation or thermal runaway phenomena inside the battery pack.

Therefore, there is a growing need to develop a battery pack that can prevent the case of the battery blocking unit from being directly exposed to a high-temperature environment even when an abnormal situation occurs inside the battery pack, and thus can prevent the occurrence of the above-mentioned electrical short circuit phenomenon, and secure he time during which the safety items inside the battery pack can operate.

### [DETAILED DESCRIPTION OF THE INVENTION]

### [Technical Problem]

It is an object of the present disclosure to provide a battery pack that that includes at least one expanded silicone part located in a case of a battery disconnect unit, and thus prevents from being directly exposed to or being in contact with a battery disconnected high temperature environment when a thermal runaway phenomenon occurs inside the battery pack, and a device including the same.

The technical objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided a battery pack comprising: a pack frame on which a plurality of battery modules are mounted; a battery disconnect unit(BDU) located inside the pack frame and electrically connected to the plurality of battery modules; and at least one expanded silicone part located in a case of the battery disconnect unit, wherein an expanded silicone material included in the expanded silicone part exposing to a high temperature environment inside the pack frame expands toward the outside of the case.

The battery disconnect unit(BDU) is formed with a silicone expansion part in which the expanded silicone material included in the expanded silicone part expands toward the outside of the case, wherein the silicone expansion part may extend along the outer surface of the case in a high temperature environment inside the pack frame.

The silicone expansion part may be located between the outer surface of the case and the pack frame or between the outer surface of the case and the battery module.

In the case, the at least one expanded silicone part may be arranged at a position adjacent to the plurality of battery modules.

In the case, the at least one expanded silicone part may be respectively arranged on an upper part and a lower part of the case.

The expanded silicone part may be formed by injecting an expanded silicone material into the inside of the case, and a part of the expanded silicone part may be exposed to the outer surface of the case.

The expanded silicone part may be formed in an inverted T shape in the case.

The case may be made of plastic or aluminum material.

The battery disconnect unit may comprise at least one relay component and a busbar electrically connecting the relay components.

The at least one expanded silicone part may be arranged spaced apart from each other along the outer surface of the case.

The at least one expanded silicone part may comprise at least one first expanded silicone part that is respectively arranged on the lower part of the case, and at least one second expanded silicone part that is respectively arranged on the upper part of the case.

The battery disconnect unit may have at least one second expanded silicone part arranged in a direction toward the plurality of battery modules.

The number of the at least one second expanded silicone part may be greater than the number of the at least one first expanded silicone part.

According to another embodiment of the present disclosure, there is provided a device comprising the above-mentioned battery pack.

### [Advantageous Effects]

According to embodiments, the present disclosure relates to a battery pack comprising at least one expanded silicone part located in a case of a battery disconnect unit, and a device comprising the same, in which when a thermal runaway phenomenon occurs inside the battery pack, the battery disconnect unit can be prevented from being directly exposed to or being in contact with a high temperature environment.

The effects of the present disclosure are not limited to the effects mentioned above and additional other effects not described above will be clearly understood from the detailed description and the accompanying drawings by those skilled in the art.

### [BRIEF DESCRIPTION OF THE DRAWINGS]

FIG. 1 is a cross-sectional view schematically showing a battery disconnect unit(BDU) according to one embodiment of the present disclosure;
FIG. 2 is a cross-sectional view which enlarges and shows a part of FIG. 1;
FIG. 3 is a top view of a battery pack including the battery disconnect unit of FIG. 1, schematically showing the case where it is in a normal state; and
FIG. 4 is a top view of a battery pack including the battery disconnect unit of FIG. 1, schematically showing the case where a thermal runaway phenomenon occurs in some battery modules.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and thus, the present disclosure is not necessarily limited to those illustrated in the drawings. In the drawings, the thickness of layers, regions, etc. are exaggerated for clarity. In the drawings, the thicknesses of some layers and region are exaggerated for convenience of description.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Now, a battery disconnect unit(BDU) 100 according to one embodiment of the present disclosure will be described.

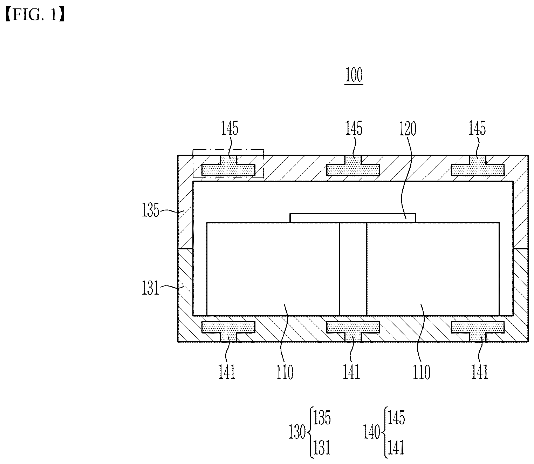

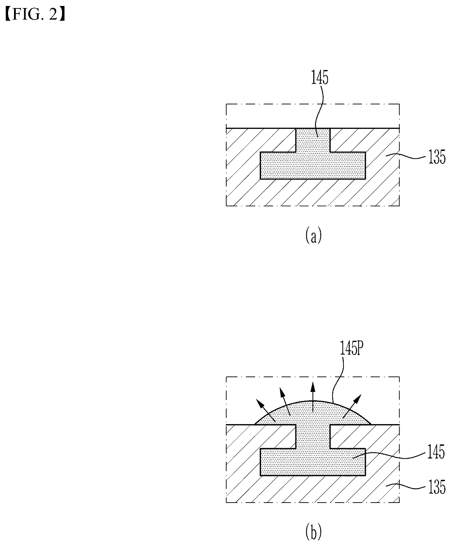

FIG. 1 is a cross-sectional view schematically showing a battery disconnect unit(BDU) according to one embodiment of the present disclosure. FIG. 2 is a cross-sectional view which enlarges and shows a part of FIG. 1.

Referring to FIGS. 1 and 2, a battery disconnect unit 100 according to one embodiment of the present disclosure includes at least one relay component 110 and a busbar 120 electrically connecting the relay components 110.

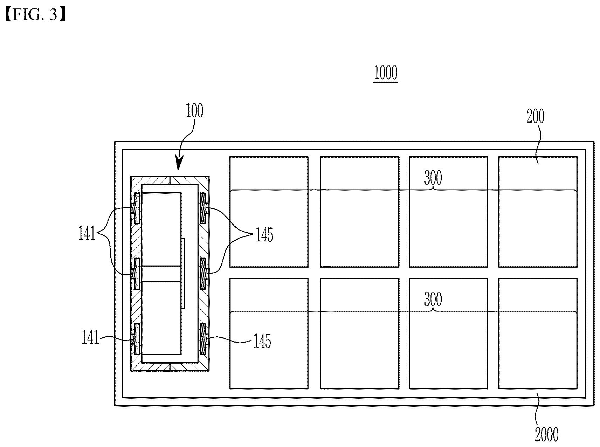

The relay component 110 is a power relay assembly(PRA), which may be a component that stably supplies or disconnect high voltage battery power to an external device. Here, the relay component 110 may be electrically connected to a terminal of a battery pack 1000 (see FIG. 3) and a power transmission system of an external device, and may be controlled by a BMS (Battery Management System) or a VCM (Vehicle Control Module).

The busbar 120 may be a high-voltage busbar that electrically connects adjacent relay components 110 in a high-voltage environment, or electrically connects the relay component 110 to the terminal of the battery pack 1000 (see FIG. 3) and/or the power transmission system of an external device. As one example, the busbar 120 may be a metal plate material having electrical conductivity.

In addition, although not shown in FIGS. 1 and 2, the battery disconnect unit 100 may be combined with a current sensor, a fuse, etc. in addition to the relay component 110 and the busbar 120.

The battery disconnect unit 100 includes a case 130 of the battery disconnect unit, and at least one of the relay component 110 and the busbar 120 described above may be housed inside the case 130.

The case 130 may include a lower case 131 and an upper case 135, wherein internal components such as a relay component 110 and a busbar 120 may be mounted inside the lower case 131, and the internal components may be covered by the upper case 135. As one example, the lower case 131 and the upper case 135 may be fixed to each other by a separate fastening method such as welding or bonding.

As one example, the case 130 may be made of plastic or aluminum material. However, the present disclosure is not limited thereto, and the case 130 may be made of a heat-resistant or fire-resistant material that is not easily destroyed in a high-temperature environment such as a fire occurring inside a battery pack 1000 (see FIG. 3) in which the battery disconnect unit 100 is mounted.

The battery disconnect unit 100 includes at least one expanded silicone part 140 located in the case 130. The at least one expanded silicone part 140 may be arranged spaced apart from each other along the outer surface of the case 130.

More specifically, the expanded silicone part 140 may include at least one first expanded silicone part 141 and at least one second expanded silicone part 145. Here, at least one first expanded silicone part 141 may be respective arranged in the lower case 131, and at least one second expanded silicone part 145 may be respectively arranged in the upper case 135.

As one example, at least one expanded silicone part 140 may be respectively arranged on the lower surface of the lower case 131 and the upper surface of the upper case 135 as shown in FIG. 1. However, the present disclosure is not limited thereto, and unlike FIG. 1, it may also be respectively arranged on the side surface of the lower case 131 and the side surface of the upper case 135.

The expanded silicone part 140 is formed by injecting an expanded silicone material into the inside of the case 130, and a part of the expanded silicone part 140 may be exposed to the outer surface of the case 130.

More specifically, a region that is recessed into the inside of the case 130 may be formed on the outer surface of the case 130. As one example, the region recessed into the inside of the case 130 may be formed by a method such as injection molding of the case 130.

An expanded silicone material can be injected into a region that is recessed into the case 130 formed in this manner, and the expanded silicone can be injected in an amount sufficient to be exposed to the outer surface of the case 130.

Here, when the expanded silicone part 140 is directly exposed to a high-temperature environment such as flame or fire, the expanded silicone material included in the expanded silicone part 140 may be formed into ceramic. At this time, the expanded silicone formed into ceramic can swell to about 4 to 5 times its original volume. In addition, the expanded silicone formed into ceramic has a relatively very low hardness, so that even if the volume becomes relatively large, it may not damage other components outside the case 130.

As one example, the expanded silicone part 140 is formed of an expanded silicone containing glass fiber. Here, the expanded silicone may mean a configuration in which a blowing agent is included in the silicone composition. However, the present disclosure is not limited thereto, and any material that can expand in a high-temperature environment such as flame or fire generated inside the battery pack 1000 (see FIG. 3) may be applied to the present embodiment.

Therefore, the battery disconnect unit 100 according to the present embodiment includes an expanded silicone material that allows the expanded silicone part 140 formed in the case 130 to expand in a high-temperature environment, so that the battery disconnect unit 100 can be protected in a high-temperature environment such as flame, fire, etc. In particular, since the hardness of the expanded silicone material that can be swollen in the expanded silicone part 140 is relatively low, the battery disconnect unit 100 can be safely protected without damaging other components outside the case 130.

As one example, as shown in FIGS. 1 and 2, the expanded silicone part 140 may be formed in an inverted T shape in the case 130. However, the present disclosure is not limited thereto, and any shape capable of housing an expanded silicone material inside the case 130 may be applied to the present embodiment.

Therefore, the battery disconnect unit 100 according to the present embodiment can house an expanded silicone material sufficient to cover the outer surface of the case 130 since the expanded silicone part 140 has the above-mentioned shape, so that the battery disconnect unit 100 can be effectively protected from a high-temperature environment such as flame or fire.

Referring to FIG. 2, FIG. 2(a) is a diagram showing the second expanded silicone part 145 in a normal environment inside the pack frame 2000 (see FIG. 3), and FIG. 2(b) is a diagram showing the second expanded silicone part 145 in a high-temperature environment inside the pack frame 2000 (see FIG. 3).

In FIG. 2, the upper case 135 and the second expanded silicone part 145 are mainly illustrated, but the same explanation can be made for the lower case 131 and the first expanded silicone part 141, and for convenience of explanation, the upper case 135 and the second expanded silicone part 145 will be mainly described.

Referring to FIG. 2(b), the battery disconnect unit 100 may be formed with a silicon expansion part 145P in which the expanded silicone material included in the second expanded silicone part 145 expands toward the outside of the case 135 in a high temperature environment inside the pack frame 2000 (see FIG. 3). More specifically, the silicon expansion part 145P may extend along the outer surface of the upper case 135.

Here, the high temperature environment inside the pack frame 2000 (see FIG. 3) may be an environment in which the temperature inside the pack frame 2000 (see FIG. 3) is increased due to phenomena such as overcurrent, overheating, and thermal runaway of multiple battery modules 200 mounted together inside the battery pack 1000 (see FIG. 3). More specifically, the high temperature environment inside the pack frame 2000 (FIG. 3) may mean an environment in which a fire occurs through a cell event such as thermal runaway in a battery cell located inside the battery pack 1000 (see FIG. 3), and some of the internal components of the pack frame 2000 (see FIG. 3) are exposed to flames. As one example, the high temperature environment inside the pack frame 2000 (see FIG. 3) is heated to a temperature of 400 degrees Celsius or more, which is a temperature at which some of the internal components of the pack frame 2000 (see FIG. 3) may be destroyed by flames. In other words, the high temperature environment inside the pack frame 2000 (see FIG. 3) may mean an ultra-high temperature environment that has rapidly risen to a temperature of over 1200 degrees Celsius.

Thereby, the battery disconnect unit 100 according to the present embodiment has an expanded silicone part 140 formed in the case 130, and a silicone expansion part 145P formed on the outer surface of the case 130 in a high-temperature environment inside the pack frame (2000, FIG. 3), so that the case 130 can be protected from a high-temperature environment such as a fire occurring inside the battery pack 1000 (see FIG. 3).

That is, the silicon expansion part 145P can prevent direct contact between the components inside the case 130 and the pack frame 2000 (see FIG. 3), thereby preventing a thermal propagation phenomenon due to thermal contact between the components inside the case 130 and the pack frame 2000 (see FIG. 3) or an electrical short phenomenon due to electrical contact.

Next, a battery pack 1000 according to one embodiment of the present disclosure will be described.

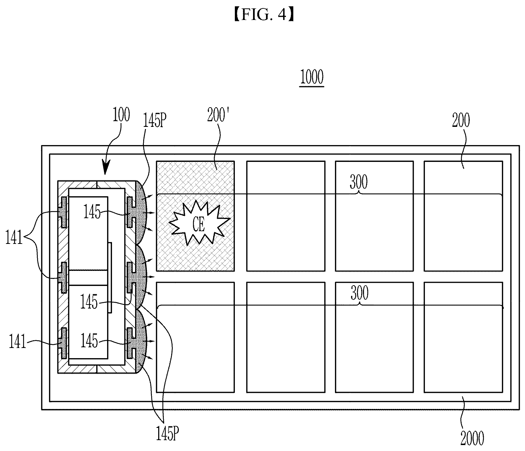

FIG. 3 is a top view of a battery pack including the battery disconnect unit of FIG. 1, schematically showing the case where it is in a normal state. FIG. 4 is a top view of a battery pack including the battery disconnect unit of FIG. 1, schematically showing the case where a thermal runaway phenomenon occurs in some battery modules.

Referring to FIG. 3, a battery pack 1000 according to one embodiment of the present disclosure includes a pack frame 2000 on which a plurality of battery modules 200 are mounted, and a battery disconnect unit 100 electrically connected to the plurality of battery modules 200 may be located inside the pack frame 2000.

Here, the pack frame 2000 may include a lower pack frame (not shown) on which a plurality of battery modules 200 are mounted, and an upper pack frame (not shown) located on the upper part of the battery module 200. More specifically, the upper pack frame can cover the upper part of the lower pack frame while a plurality of battery modules 200 are mounted on the lower pack frame. Here, the lower pack frame and the upper pack frame can be coupled to each other by a method such as welding or bonding, thereby sealing the inside of the battery pack 1000.

As one example, the pack frame 2000 may be made of a heat insulating material. As one example, the pack frame 2000 may be made of an aluminum extrusion structure. As another example, the pack frame 2000 may be made of a dissimilar metal bonding material such as clad metal, or may be a structure including a heat insulating material such as aerogel or EPP (Expanded Polypropylenes) foam. As another example, the pack frame 2000 may be a structure including a material such as silicon foam, mica, or glass fiber pad. However, the present disclosure is not limited thereto, and the pack frame 2000 may be used without limitation as long as it is made of a heat insulating material having a predetermined stiffness.

A plurality of battery modules 200 can form a packaged battery module arranging body 300. The shape in which the plurality of battery modules 200 are arranged in the battery module arranging body 300 is not limited to the arrangement shown in FIGS. 3 and 4, but various arrangement shapes may be considered depending on the shape of the pack frame 2000.

The battery module 200 includes a battery cell stack (not shown) in which a plurality of battery cells are stacked, and a module frame (not shown) that houses the battery cell stack (not shown).

The battery cell is preferably a pouch-type battery cell. As one example, the battery cell may be produced by housing the electrode assembly in a pouch case of a laminate sheet including a resin layer and an inner layer, and then heat-sealing a sealing part of the pouch case. The battery cell may be formed in a rectangular sheet-like structure. The battery cells may be configured by a plurality of numbers, and the plurality of battery cells are stacked so as to be electrically connected to each other, thereby forming a battery cell stack. Here, the number of battery cells constituting the battery cell stack (not shown) may be adjusted according to circumstances.

The module frame (not shown) may include an upper cover and a U-shaped frame. Here, the U-shaped frame may include a bottom part and two side surface parts extending upward from both ends of the bottom part. At this time, the bottom part may cover the lower surface of the battery cell stack (not shown), and the side surface part may cover the side surface of the battery cell stack (not shown). The upper cover and the U-shaped frame may be coupled by welding or the like in a state where the corresponding corner parts are in contact with each other, thereby forming a structure that covers the upper, lower, left, and right surfaces of the battery cell stack (not shown). For this purpose, the upper cover and the U-shaped frame may be made of a metal material having a predetermined strength.

However, the structure of the module frame (not shown) is not limited thereto, and in another embodiment, the module frame (not shown) may have a mono frame structure. Here, the mono frame may be in the form of a metal plate material in which the upper surface, lower surface, and both sides are integrated. The mono frame may be produced by extrusion molding. In addition, the structure of the module frame (not shown) may be provided as an L-shaped frame structure in addition to a mono frame or a U-shaped frame, and may be provided in various structures not described in the above-mentioned examples.

In addition, the battery module 200 further includes a busbar frame located on the front and rear surfaces of the battery cell stack (not shown), and an end plate covering the busbar frame. Here, a busbar (not shown) electrically connected to the battery cell stack (not shown) may be located on the busbar frame. Thereby, the end plate may physically protect the battery cell stack (not shown) and other electrical components from external impact.

Referring to FIG. 3, the battery disconnect unit 100 may have at least one second foamed silicone part 145 arranged in a direction toward the plurality of battery modules 200. In other words, in the case 130 of the battery disconnect unit 100, the expanded silicone part 140 may include a first expanded silicone part 141 located adjacent to the pack frame 2000 and a second expanded silicone part 145 located adjacent to the plurality of battery modules 200. However, the arrangement of the battery disconnect unit 100 is not limited thereto, and the opposite case may also be included in the present embodiment.

Therefore, in the battery pack 1000 according to the present embodiment, the expanded silicone part 140 can safely protect the battery disconnect unit 100 from internal components such as the pack frame 2000 and the plurality of battery modules 200.

Here, the arrangement number and spacing of the first expanded silicone part 141 and the second expanded silicone part 145 may be the same as shown in FIG. 3, but the number and spacing may be adjusted as necessary.

As one example, in the case 130 of the battery disconnect unit 100, at least one expanded silicone part 140 may be arranged at a position adjacent to a plurality of battery modules 200. Although not shown in FIG. 3, a relatively large number of at least one expanded silicone part 140 may be arranged at a position adjacent to the plurality of battery modules 200. In other words, the number of at least one second expanded silicone part 145 may be greater than the number of at least one first expanded silicone part 141.

Therefore, in the battery pack 1000 according to the present embodiment, the expanded silicone part 140 is preferentially arranged adjacent to a plurality of battery modules 200 that relatively more cause a high temperature environment inside the pack frame 2000, so that the safety of the battery blocking unit 100 can be secured more effectively.

In the battery pack 1000 according to the present embodiment, the expanded silicone material included in an expanded silicone part 140 exposed to a high temperature environment inside the pack frame 2000 (see FIG. 3) expands toward the outside of the case 130. Here, the expanded silicone part 140 exposed to a high temperature environment may refer to an expanded silicone part 140 located adjacent to a component that causes a high temperature environment inside the pack frame 2000 (see FIG. 3) or is heated to a high temperature. In other words, the expanded silicone part 140 exposed to a high temperature environment may refer to an expanded silicone part 140 located adjacent to a flame or fire point generated from a component that causes a high temperature environment inside the pack frame 2000 (see FIG. 3).

As one example, referring to FIG. 4, when a cell event(CE) such as overcurrent, overheating, or thermal runaway occurs in a specific battery module 200' adjacent to a battery disconnect unit 100, the second expanded silicone part 145 located adjacent to the specific battery module 200' expands toward the outside of the case 130, and a silicone expansion part 145P may be formed along the outer surface of the case 130. Here, the silicone expansion part 145P may be located between the outer surface of the upper case 135 and the specific battery module 200'.

Unlike FIG. 4, when the pack frame 2000 adjacent to the battery disconnect unit 100 is heated to a high temperature due to the high temperature environment inside the pack frame 2000, the first expanded silicone part 141 located adjacent to the pack frame 2000 expands toward the outside of the case 130, and a silicone expansion part (not shown) located between the outer surface of the case 130 and the pack frame 2000 can be formed.

Therefore, in the battery pack 1000 according to the present embodiment, the silicone expansion part 145P can safely protect the battery disconnect unit 100 from the pack frame 2000 and/or the internal components of the pack frame 2000 in the high temperature environment inside the pack frame 2000.

In addition, the silicone expansion part 145P prevents the case 130 from being exposed to a high temperature environment such as an external flame, thereby sufficiently delaying he time when the case 130 destroys, and sufficiently securing the operating time of safety components such as a fuse located inside the battery pack 1000.

The above-mentioned battery module and a battery pack comprising the same can be applied to various devices. Such a device can be applied to a vehicle means such as an electric bicycle, an electric vehicle, or a hybrid vehicle, but the present disclosure is not limited thereto, and is applicable to various devices that can use a battery module and a battery pack comprising the same, which is also falls under the scope of the present disclosure.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Symbols]

100: battery disconnect unit
110: relay part
120: busbar
130: case
140: expanded silicone part
200: battery module
300: plurality of battery modules
1000: battery pack
2000: pack frame

## Claims

1. A battery pack comprising:
a pack frame on which a plurality of battery modules are mounted;
a battery disconnect unit(BDU) located inside the pack frame and electrically connected to the plurality of battery modules; and
at least one expanded silicone part located in a case of the battery disconnect unit,
wherein an expanded silicone material included in the expanded silicone part exposing to a high temperature environment inside the pack frame expands toward the outside of the case.

2. The battery pack according to claim 1, wherein:
the battery disconnect unit(BDU)
is formed with a silicone expansion part in which the expanded silicone material included in the expanded silicone part expands toward the outside of the case in a high temperature environment inside the pack frame,
wherein the silicone expansion part extends along the outer surface of the case.

3. The battery pack according to claim 2, wherein:
the silicone expansion part is located between the outer surface of the case and the pack frame or between the outer surface of the case and the battery module.

4. The battery pack according to claim 1, wherein:
in the case, the at least one expanded silicone part is arranged at a position adjacent to the plurality of battery modules.

5. The battery pack according to claim 1, wherein:
in the case, the at least one expanded silicone part is respectively arranged on an upper part and a lower part of the case.

6. The battery pack according to claim 1, wherein:
the expanded silicone part is formed by injecting an expanded silicone material into the inside of the case, and
a part of the expanded silicone part is exposed to the outer surface of the case.

7. The battery pack according to claim 6, wherein:
the expanded silicone part is formed in an inverted T shape in the case.

8. The battery pack according to claim 1, wherein:
the case is made of plastic or aluminum material.

9. The battery pack according to claim 1, wherein:
the battery disconnect unit comprises at least one relay component and a busbar electrically connecting the relay components.

10. The battery pack according to claim 1, wherein:
the at least one expanded silicone part is arranged spaced apart from each other along the outer surface of the case.

11. The battery pack according to claim 10, wherein:
the at least one expanded silicone part comprises at least one first expanded silicone part that is respectively arranged on the lower part of the case, and at least one second expanded silicone part that is respectively arranged on the upper part of the case.

12. The battery pack according to claim 10, wherein:
the battery disconnect unit has at least one second expanded silicone part arranged in a direction toward the plurality of battery modules.

13. The battery pack according to claim 12, wherein:
the number of the at least one second expanded silicone part is greater than the number of the at least one first expanded silicone part.

14. A device comprising the battery pack according to claim 1.
